# EUROPÄISCHE PATENTANMELDUNG

(11) **EP 1 243 558 A1**
(43) Veröffentlichungstag der Anmeldung: **25.09.2002**
(21) Anmeldenummer: 02090113.8
(22) Anmeldetag: 18.03.2002
(51) Int. Cl.: C02F 1/28, C02F 1/72

(54) **Verfahren zum Entfernen von halogenierten Schadstoffen aus Industrieabwasser**

(30) Priorität: 20.03.2001 DE 10114739; 15.03.2002 DE
(71) Anmelder: Silica Verfahrenstechnik GmbH, 13509 Berlin (DE)
(72) Erfinder: Schlicht, Burkhard, Dipl.-Ing, 12621 Berlin (DE); Redlich, Hans-Joachim, Dipl.-Ing., 13465 Berlin (DE); Höhne, Gert, Dipl.-Ing., 13467 Berlin (DE)
(74) Vertreter: COHAUSZ DAWIDOWICZ HANNIG & PARTNER

(57) **Zusammenfassung**

Verfahren zum drucklosen Entfernen von halogenierten Schadstoffen aus Industrieabwasser, insbesondere chlorierten Kohlenwasserstoffen, deren Eintrittskonzentration sehr klein ist und etwa der Austrittskonzentration nach einer Behandlung in einer physikalischen oder chemischen Abwasserreinigung entspricht, bei dem diese Schadstoffe mit einem regenerierbaren Adsorbens in Kontakt gebracht werden, das in der Lage ist, die Schadstoffe nassoxidativ umzusetzen, wobei zur Regeneration des Adsorbens eine Wasserstoffperoxidlösung eingesetzt wird.

Der Erfindung liegt die Aufgabe zugrunde, ein Verfahren der eingangs genannten Art zur Verfügung zu stellen, mit dem die in sehr geringen Konzentrationen im Abwasser vorliegenden Schadstoffe wie beispielsweise AOX, signifikant abgereichert und in vollständig ungefährliche Stoffe umgesetzt werden, wodurch gleichzeitig eine gefahrlose, den gesetzlichen Bedingungen entsprechende Einleitung in das Abwassernetz ermöglicht wird. Gelöst wird diese Aufgabe dadurch, dass als Adsorbens hydrophile und/oder hydrophobe Adsorbentien oder mechanische Gemenge unterschiedlicher Adsorbentien wie Molekularsiebe und Aktivkohlen mit aktiven Zentren unter Ausführung folgender Schritte verwendet werden:
a) Einstellen des Abwassers auf einen pH-Wert zwischen >7 bis 12,
b) Anreichern der Schadstoffe an den aktiven Zentren der Adsorbentien aus dem Abwasser heraus mittels Hindurchleiten des Abwassers durch mindestens einen Adsorber bis zum Durchbruch,
c) Zersetzen der Schadstoffe an den aktiven Zentren in Kohlendioxid, Wasser und Halogenid unter gleichzeitiger Regeneration in einem ersten Regenerationsschritt durch Behandeln der Adsorbentien mit einer an sich bekannten wässrigen Lösung aus Wasserstoffperoxid,
d) zusätzliches Fluten der regenerierten Adsorbentien gemäß Schritt c) mit einer wässrigen Natronlauge in einem zweiten Regenerationsschritt zum Entfernen eventuell verbleibender Oxidationsprodukte aus dem Adsorber und
e) Zumischen der verbrauchten Lösung gemäß Schritt c) zum Abwasser.

## Beschreibung

Die Erfindung betrifft ein Verfahren zum Entfernen von halogenierten Schadstoffen aus Industrieabwasser, insbesondere chlorierten Kohlenwasserstoffen, deren Eintrittskonzentration sehr klein ist und etwa der Austrittskonzentration nach einer Behandlung in einer chemischen oder physikalischen Abwasserreinigung entspricht, bei dem diese Schadstoffe mit einem regenerierbaren Adsorbens in Kontakt gebracht werden, das in der Lage ist, die Schadstoffe nassoxidativ umzusetzen, wobei zur Regeneration des Adsorbens eine Wasserstoffperoxidlösung eingesetzt wird.

Aus der DE 196 05 421 A1 ist ein Verfahren zur Reinigung von Abwässern durch Nassoxidation von im Wasser befindlichen organischen Schadstoffen mit Wasserstoffperoxid bekannt, bei dem das Wasserstoffperoxid durch adsorptiv wirkende Katalysatoren aktiviert wird, welche aus nichtmetallhaltigen anorganischen Verbindungen bestehen. Die Oberflächeneigenschaften der Katalysatoren sind adsorbierend und hydrophil.

Dem Abwasser wird bei diesem bekannten Verfahren Wasserstoffperoxid in entsprechender Menge zugesetzt, das durch den im Reaktor in lockerer Schüttung befindlichen Katalysator aktiviert wird, wobei sich OH-Radikale bilden, die die an der Katalysatoroberfläche haftenden Schadstoffe oxidieren. Das bekannte Verfahren arbeitet bei einem Reaktionsdruck von 1 bis 10 bar.

Insbesondere sehr geringe Eingangskonzentrationen der Schadstoffe im Abwasser erfordern sehr große Mengen an Wasserstoffperoxid, um eine möglichst vollständige katalytische Umsetzung zu erreichen. Der Katalysator muss darüber hinaus im Schwebezustand gehalten werden. Das bekannte Verfahren ist somit apparativ aufwendig, kosten- und energieintensiv.

Die EP 0 228 086 A2 offenbart einen Kreislaufprozess zum Reinigen wässriger, gelöste organische Verunreinigungen enthaltende Medien. Das Ausgangswasser wird mit einer adsorptiven Masse eines hydrophoben zeolithischen Molekularsiebes mit einem Siliziumoxid-Aluminiumoxid-Verhältnis von mindestens 50 bei Temperaturen von etwa 65 °C in Kontakt gebracht, wobei das Molekularsieb Porendurchmesser hat, die groß genug sind, um zumindest einige organische Verbindungen zu adsorbieren. Durch Inkontaktbringen mit einer wässrigen Lösung aus Wasserstoffperoxid, Chloraten, Permanganaten und Dichromaten wird ein Teil des organischen Adsorbates oxidiert und der Zeolith regeneriert, wobei Wasserstoffperoxid in einer wässrigen Lösung zwischen 20 bis 40 Gew.-% bevorzugt angewendet wird. Danach wird das regenerierte Molekularsieb wieder mit dem Abwasser kontaktiert.

Dieses bekannte Verfahren hat den Nachteil, dass es Zeolithe verwendet, die eine geringe alkalische Stabilität, insbesondere bei den genannten höheren Temperaturen aufweisen.

Des weiteren wird mit Wasserstoffperoxidlösungen regeneriert, deren Konzentrationen zwischen 20 und 40 Gew.-% bzw. 100 Gew.-% sehr hoch sind. Gleichzeitig besteht die Gefahr, dass durch nach der Regeneration an dem Zeolithen anhaftende Oxidationsprodukte in das Abwasser eingeschleppt werden.

Bei diesem Stand der Technik liegt der Erfindung die Aufgabe zugrunde, ein Verfahren der eingangs genannten Art zur Verfügung zu stellen, mit dem die in sehr geringen Konzentrationen im Abwasser vorliegenden Schadstoffe wie beispielsweise AOX, signifikant abgereichert und in vollständig gefahrlose Stoffe umgesetzt werden, wodurch gleichzeitig eine gefahrlose, den gesetzlichen Bedingungen entsprechende Einleitung in das Abwassernetz ermöglicht wird.

Diese Aufgabe wird durch ein Verfahren der eingangs genannten Gattung mit den kennzeichnenden Merkmalen des Anspruches 1 gelöst. Vorteilhafte Ausgestaltungen des Verfahrens und der Vorrichtung sind den Unteransprüchen entnehmbar.

Das erfindungsgemäße Verfahren zeichnet sich vor allem dadurch aus, dass es möglich wird, in Industrieabwässern enthaltende Schadstoffe mit geringem Energie- und Kostenaufwand in gefahrlose Stoffe umzusetzen. Die Schadstoffe werden an einem Adsorptionsmittel mit entsprechender Porengröße aus dem Wasser heraus adsorbiert. Wenn diese Schadstoffe, deren Konzentration bereits beim Eintritt in den Adsorber sehr klein ist, durch das Adsorptionsmittel durchbrechen, d.h. die Sättigungsbeladung des Adsorptionsmittels erreicht ist, wird der beladene Adsorber regeneriert. Das Adsorptionsmittel wird dazu mit einer wässrigen Wasserstoffperoxidlösung behandelt. Dabei bilden sich OH-Radikale, die die Schadstoffe zersetzen. Es entsteht Kohlendioxid, Wasser und Halogenid. Nach vollzogener Regeneration wird die verbrauchte Lösung dem Abwasser zugesetzt. Da das Abwasser nach dem erfindungsgemäßen Verfahren basisch eingestellt ist, wird das Halogenid, beispielsweise Chlorid in Natriumchlorid, umgesetzt. Wegen der an sich schon geringen Schadstoffkonzentration im Abwasser liegt die Konzentration des Natriumchlorids in keiner Größenordnung vor, die bei den Einleitbedingungen zu beachten sind.

Das erfindungsgemäße Verfahren wird bei zeolithischen Adsorptionsmitteln grundsätzlich ohne zusätzlich katalytisch eingebrachte Aktivkomponenten in Form von Metallen oder Metalloxiden durchgeführt. Es läuft als Folgeprozess von Adsorption und anschließender Reaktion ab, die eine Totaloxidation bei Umgebungstemperatur darstellt und vollkommen unschädliche Stoffe wie Kohlendioxid, Wasser und das entsprechende Halogenid liefert.

Es kann grundsätzlich nicht ausgeschlossen werden, dass bei der Oxidation der Schadstoffe im ersten Regenerationsschritt, beispielsweise Chlorbestandteile an dem Adsorptionsmittel anhaften. Damit diese Stoffe nicht in das gereinigte Abwasser gelangen können, wird das bereits regenerierte Adsorptionsmittel nochmals mit einer wässrigen Lösung aus Natronlauge geflutet. Dadurch wird mit dem erfindungsgemäßen Verfahren erreicht, dass die Schadstoffe vollständig aus dem Adsorptionsmittel entfernt werden, so dass kein Schadstoff, auch ein eventuell im Oxidationsprozess entstandener, in das gereinigte Abwasser gelangt.

Anschließend wird das so regenerierte Adsorptionsmittel wieder dem Abwasserstrom ausgesetzt und die Adsorption der Schadstoffe am Adsorptionsmittel fortgesetzt.

Es hat sich überraschender Weise gezeigt, dass insbesondere hydrophile Adsorbentien wie beispielsweise hydrophile Molekularsiebe des Typs NaX und NaY besonders für die Adsorption chlorierter Kohlenwasserstoffe aus Abwasser besonders vorteilhaft geeignet sind.

Dies ist deshalb so unerwartet, weil die hydrophilen Molekularsiebe normalerweise sehr stark Wasser selektiv adsorbieren. Auf Grund der dabei frei werdenden Adsorptionswärme ist zu erwarten, dass das Wasser bereits adsorbierte Schadstoffe im Molekularsieb vertreibt. Dies tritt jedoch nicht ein.

Der entscheidende Vorteil beim Einsatz der NaX bzw. NaY-Molekularsiebe besteht darin, dass genau an den Stellen selektiver Schadstoffadsorption im Zeolith auch die zur Oxidation notwendigen OH-Radikale gebildet werden, d.h. es sind keine Transportwege vorhanden. Obwohl die Sorptionszentren bis zur Sättigung beladen werden, verlieren sie nicht ihre Aktivität zur Bildung von OH-Radikalen aus Wasserstoffperoxid. Dadurch wird eine wesentlich vollständigere und bessere Regeneration der Molekularsiebe und letztlich auch eine bedeutend höhere Beladung der eingesetzten Molekularsiebe erreicht.

Ein weiterer Vorteil des erfindungsgemäßen Verfahrens besteht darin, dass auf zusätzlich von außen eingebrachte Energie verzichtet werden kann.

Das erfindungsgemäße Verfahren zeichnet sich ferner dadurch aus, dass Adsorption und Katalyse an ein und demselben Zentrum erfolgen, wodurch sich die Aktivierungsenergie der Reaktion reduziert, die Umsatzrate erhöht und eine Totaloxidation unter Bildung vollkommen unschädlicher Stoffe möglich wird.

Durch das Anheben des pH-Wertes des Abwassers in den basischen Bereich wird die Zerstörung der Molekularsiebe durch das Wasser bzw. die bei der Nassoxidation entstehen könnenden Säure vorgebeugt. Das erfindungsgemäße Verfahren gestattet es deshalb auch, eine Vielzahl hydrophiler Molekularsiebe je nach Wahl der Reinigungsaufgabe einzusetzen.

Der Adsorptionsschritt kann durch die Wahl des Adsorptionsmittels bis zum Durchbruch effektiver ablaufen, was im Hinblick auf die geringe Eintrittskonzentration an Schadstoffen im Abwasser von entscheidender Bedeutung ist.

Weitere Vorteile und Einzelheiten ergeben sich aus der nachfolgenden Beschreibung unter Bezugnahme auf die beigefügten Zeichnungen.

Die Erfindung soll nachstehend an einem Ausführungsbeispiel näher erläutert werden.

Es zeigen:
- Fig. 1: ein Schema für den Verfahrensschritt der Adsorption,
- Fig. 2: ein Schema für den ersten Regenrationsschritt und
- Fig. 3: ein Schema für den zweiten Regenerationsschritt.

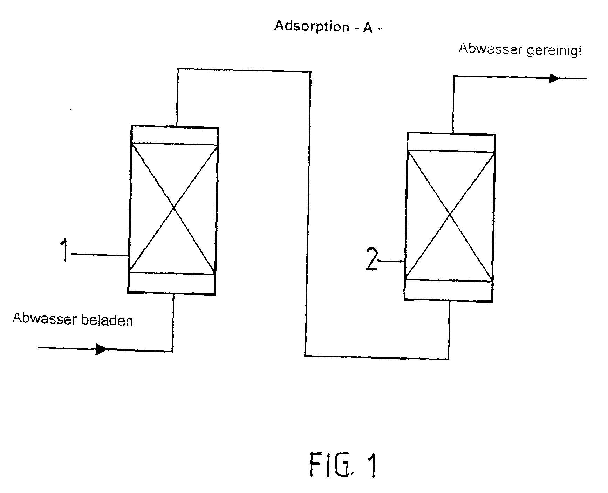

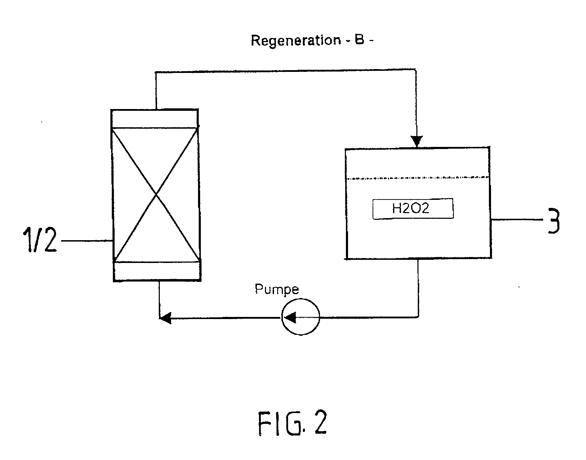

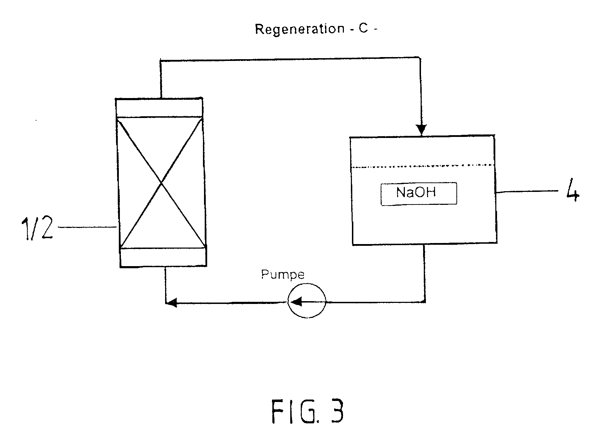

Der grundsätzliche Ablauf des erfindungsgemäßen Verfahrens ist den Fig. 1 bis 3 zu entnehmen. Das erfindungsgemäße Verfahren ist unterteilt in eine als Anreicherungsschritt ausgestaltete Adsorption **A** und einen ersten Regenerationsschritt **B** und einen zweiten Regenerationsschritt **C**.

Aus einem mit adsorbierbaren organischen Halogenverbindungen (AOX-Komponenten) belasteten Abwasserstrom von 10 m³/h sollen beispielsweise die Schadstoffe Dichlorisopropanol oder Dichlor-1-Propanol entfernt werden. Die Endreinheit im nach dem erfindungsgemäßen Verfahren behandelten Abwasser soll < 0,5 mg/l betragen.

Das mit Schadstoffen beladene Abwasser wird, wie in Fig. 1 gezeigt, durch zwei hintereinandergeschaltete, entsprechend der Abwassermenge ausgelegte Adsorbern **1** und **2** geleitet. Als Adsorbens wird ein hydrophiles Molekularsieb des Typs NaX oder NaY eingesetzt. Für einige Reinigungsaufgaben haben sich Mischungen aus Molekularsieben und Aktivkohlen mit hoher spezifischer Oberfläche als besonders vorteilhaft erwiesen. Je Adsorber **1** und **2** kommen 2000 kg Adsorbens zum Einsatz. Das zu behandelnde Abwasser hat durch Zusetzen von Natronlauge einen pH-Wert von 9.

Das Abwasser durchströmt beide Adsorber und verlässt mit einem Gehalt an Schadstoffen von <0,5 mg/l gereinigt die Anlage.

Beim Durchströmen der Adsorber adsorbiert das Adsorbens an seinen aktiven Zentren im Adsorptionsschritt **A** die Schadstoffe solange, bis beispielsweise der Adsorber **1** durchbricht, d.h. beladen ist. Der Adsorber **1** wird sodann auf den ersten Regenerationsschritt **B** umgeschaltet. Dabei wird über einen Behälter **3**, der gleichzeitig als Pumpenvorlage dient, eine 2 Gew.-%ige Wasserstoffperoxidlösung durch den Adsorber **1** geleitet. Es bilden sich an den Stellen, an denen die Schadstoffe im Adsorbens angelagert sind, OH-Radikale, die die Schadstoffe oxidieren und in Wasser, Kohlendioxid und Chlorid umsetzen.

Nach erfolgter Durchführung des ersten Regenrationsschrittes **B** wird die verbrauchte Wasserstoffperoxidlösung dem Abwasser zugesetzt.

Auf Grund des basisch eingestellten Abwassers liegt letztlich das Chlorid als völlig ungefährliches Kochsalz (Natriumchlorid) vor. Die Konzentration des Natriumchlorids ist so gering, dass dieselbe weit unter den gesetzlich vorgeschriebenen Einleitbedingungen liegt.

Es schließt sich der zweite Regenerationsschritt **C** an. Es kann nicht ausgeschlossen werden, dass bei der Oxidation im ersten Regenerationsschritt **B** beispielsweise Oxidationsbestandteile am eingesetzten Adsorbens haften bleiben. Der Adsorber **1** wird deshalb mit einer wässrigen Natronlauge geflutet, die im Behälter **4** bevorratet ist. Die Konzentration der Natronlauge liegt bei einer 0,1 molaren Lösung. Dadurch wird erreicht, dass alle eventuell im Adsorber noch vorhandenen Schadstoffe eliminiert werden.

Anschließend wird der so desorbierte Adsorber **1** wieder von dem Abwasserstrom beaufschlagt, wobei die Adsorber so verschaltet sind, dass der jeweils regenerierte Adsorber immer an die letzte Stelle geschaltet werden kann.

Aufstellung der verwendeten Bezugszeichen

| | |
|---|---|
| Adsorber | 1, 2 |
| Behälter für Wasserstoffperoxid | 3 |
| Behälter für Natronlauge | 4 |
| Adsorptionsschritt | A |
| Erster Regenerationsschritt | B |
| Zweiter Regenerationsschritt | C |

## Patentansprüche

1. Verfahren zum drucklosen Entfernen von halogenierten Schadstoffen aus Industrieabwasser, insbesondere chlorierten Kohlenwasserstoffen, deren Eintrittskonzentration sehr klein ist und etwa der Austrittskonzentration nach einer Behandlung in einer physikalischen oder chemischen Abwasserreinigung entspricht, bei dem diese Schadstoffe mit einem regenerierbaren Adsorbens in Kontakt gebracht werden, das in der Lage ist, die Schadstoffe nassoxidativ umzusetzen, wobei zur Regeneration des Adsorbens eine Wasserstoffperoxidlösung eingesetzt wird, **dadurch gekennzeichnet, dass** als Adsorbens hydrophile und/oder hydrophobe Adsorbentien oder mechanische Gemenge unterschiedlicher Adsorbentien wie Molekularsiebe und Aktivkohle mit aktiven Zentren unter Ausführung folgender Schritte verwendet werden:
a) Einstellen des Abwassers auf einen pH-Wert zwischen >7 bis 12,
b) Anreichern der Schadstoffe an den aktiven Zentren der Adsorbentien aus dem Abwasser heraus mittels Hindurchleiten des Abwassers durch mindestens einen Adsorber bis zum Durchbruch,
c) Zersetzen der Schadstoffe an den aktiven Zentren in Kohlendioxid, Wasser und Halogenid unter gleichzeitiger Regeneration in einem ersten Regenerationsschritt durch Behandeln der Adsorbentien mit einer an sich bekannten wässrigen Lösung aus Wasserstoffperoxyd,
d) zusätzliches Fluten der regenerierten Adsorbentien gemäß Schritt c) mit einer wässrigen Natronlauge in einem zweiten Regenerationsschritt zum Entfernen eventuell verbleibender Oxidationsprodukte aus dem Adsorber, und
e) Zumischen der verbrauchten Lösung gemäß Schritt c) zum Abwasser.

2. Verfahren nach Anspruch 1, **dadurch gekennzeichnet, dass** zum Einstellen des pH-Wertes Natronlauge verwendet wird.

3. Verfahren nach Anspruch 2, **dadurch gekennzeichnet, dass** der pH-Wert auf vorzugsweise 9 bis 10 eingestellt wird.

4. Verfahren nach Anspruch 1, **dadurch gekennzeichnet, dass** als Adsorbens hydrophile Molekularsiebe, vorzugsweise natürliche oder synthetische Zeolithe des Typs NaX oder NaY, eingesetzt werden.

5. Verfahren nach Anspruch 1, **dadurch gekennzeichnet, dass** als Adsorbens Molekularsiebe geringer Hydrophilie eingesetzt werden.

6. Verfahren nach Anspruch 1, **dadurch gekennzeichnet, dass** als Adsorbens Mischungen von Molekularsieben unterschiedlicher Hydrophilie und/oder Mischungen von Aktivkohlen eingesetzt werden.

7. Verfahren nach Anspruch 1 bis 7, **dadurch gekennzeichnet, dass** zur Regeneration des Adsorbens im ersten Regenerationsschritt eine 0,1 bis 10 Gew.-%ige, vorzugsweise 2 bis 5 Gew.-%ige, Wasserstoffperoxydlösung eingesetzt wird.

8. Verfahren nach Anspruch 1 bis 7, **dadurch gekennzeichnet, dass** zur Regeneration des Adsorbens im zweiten Regenerationsschritt eine 0,01 bis 10 molare, vorzugsweise 0,1 bis 0,5-molare, Natronlaugelösung eingesetzt wird.

9. Verfahren nach Anspruch 1 bis 8, **dadurch gekennzeichnet, dass** eine Totaloxidation der Schadstoffe durch Reaktion mit OH-Radikalen an aktiven Zentren der Molekularsiebe durchgeführt wird, an denen die Schadstoffe angelagert werden.

10. Verfahren nach Anspruch 1 bis 10, **dadurch gekennzeichnet, dass** die Reaktionstemperatur der Umgebungstemperatur entspricht und keine zusätzlichen Energieaufwendungen notwendig sind.
